# EUROPEAN PATENT APPLICATION

(11) **EP 3 838 712 A1**
(43) Date of publication of application: **23.06.2021**
(21) Application number: 20215402.7
(22) Date of filing: 18.12.2020
(51) Int. Cl.: B62B 1/12, B62B 5/04, B62B 5/00, B62B 5/02

(54) **TROLLEY FOR TRANSPORTING A LOAD**

(30) Priority: 19.12.2019 IT 201900024796
(71) Applicant: Zonzini, Claudio, 37052 Casaleone (VR) (IT); Zonzini, Jacopo, 37052 Casaleone (VR) (IT); Zonzini, Arianna, 37053 Cerea (VR) (IT); Zonzini, Laura, 37053 Cerea (VR) (IT)
(72) Inventor: Zonzini, Claudio, 37052 Casaleone (VR) (IT); Zonzini, Jacopo, 37052 Casaleone (VR) (IT); Zonzini, Arianna, 37053 Cerea (VR) (IT); Zonzini, Laura, 37053 Cerea (VR) (IT)
(74) Representative: Braidotti, Andrea

(57) **Abstract**

Trolley for transporting a load, in particular on stairs, preferably of the stair-climbing trolley type, comprising:
- handle means configured to facilitate the handling of the trolley,
- a load-bearing frame with a load structure which is configured to support the load to be transported,
- a pair of track structures mounted on opposite sides of the supporting frame so as to protrude below from said supporting frame for supporting and/or sliding the trolley, each track structure comprising at least two rotatable elements around which tracks is wound,
- a pair of wheels arranged on opposite sides of the load structure (9) for supporting and/or sliding the trolley.

## Description

### FIELD OF THE TECHNIQUE

The present invention refers to a high-performance stair-climbing trolley.

In particular, the present invention relates to a trolley for transporting a load, in particular on stairs, both straight and helical, or other inclined paths, as well as on substantially flat paths. In particular, the present invention relates to a self-propelled stairlift trolley.

### BACKGROUND OF THE INVENTION

Stair-climbing trolleys for handling light goods are known and widely used.

Known luggage trolleys consist of a pair of wheels keyed to the base of a frame which also provides a small loading surface at the base. The frame of known luggage trolleys also provides a vertical structure which ends with a handle for gripping and moving by the user. Once the loading surface of the trolley has been loaded, the user tilts the frame in such a way as to pull the trolley with the loaded package which therefore manages to be translated horizontally due to rolling on the flat surface of the wheels.

The stair climbing trolleys are an evolution of the above-described luggage trolleys as they are generally equipped at the base with a pair of slides that allow the trolley to slide inclined through the slides on the edges of the steps of a ladder, both for downward and upward movement , in this case not operating the wheels.

Using these stair climbing trolleys the transport is therefore divided into two phases:
- a first phase of flat transport that is carried out by means of two wheels
- a second phase for transport on the ladder which takes place through the aforementioned aisles.

Known stair-climbing trolleys have many drawbacks.

In this case, the transport on stairs going downhill, but sometimes also uphill, of medium-light loads (less than 150 kg) such as packages, boxes, household appliances can be difficult and therefore it is necessary to use at least two operators, one downstream and one upstream of the trolley, due to the weights and dimensions of the material being transported.

Furthermore, there are problems related to safety in the transport phase of a load on a scale since, if the operator were to lose contact with the trolley, the latter would be at the mercy of gravity, acquiring acceleration in descent, a circumstance that could be very dangerous. for any passers-by in the vicinity as well as could cause damage to the goods transported.

Finally, stair climbing trolleys are difficult to maneuver and, in particular when descending with a load, the user must keep both hands on the handle of the trolley to be able to control its movement.

US2014/271095 and US8439371 describe stair climbing trolleys with a frame, which is provided with a loading surface for loading objects to be transported, with a pair of wheels positioned on opposite sides of the loading surface for moving the stair climbing trolley on a horizontal plane, and with a pair of tracked structures mounted on the frame and arranged at the sides of the latter.

### OBJECTS OF THE INVENTION

The object of the present invention is to propose a trolley which allows to overcome and obviate, at least in part, the above mentioned drawbacks and operating limits of the prior art.

Another object of the present invention is to propose a stair-climbing trolley that can be used by a single operator and in extreme safety both during the ascent of the stairs and during the descent.

Another object of the present invention is to propose a stair-climbing trolley which maintains the handling characteristics of known trolleys during movement on flat horizontal surfaces which are not sloping.

Another object of the present invention is to propose a stair-climbing trolley which allows the safe and stable handling of the loads transported during the ascent and descent of the stair or of the inclined plane in general.

Another object of the present invention is to propose a stair-climbing trolley that can be blocked and kept stationary along the ladder even with the load transported without the aid of the operator who keeps it in position.

Another object of the present invention is to propose a stair-climbing trolley which is simple to build and cheap to make, easy to maintain, light to transport and of reduced bulk without load.

Another object of the present invention is to propose a method of using a stair-climbing trolley that is practical and quick in changing the operating condition from transport on a horizontal plane to transport on an inclined plane/stairs.

Another object of the present invention is to propose a trolley which is reliable and resistant over time.

Another object of the present invention is to propose a trolley which can be manufactured simply, quickly and at low costs.

Another object of the present invention is to propose a trolley of low weight and easy to transport.

Another object of the present invention is to propose a trolley which is an alternative and/or an improvement with respect to traditional solutions.

Another object of the present invention is to propose a trolley which has an alternative and/or improved configuration, both in constructive and functional terms, with respect to traditional solutions.

All these purposes, both individually and in any combination thereof, and others which will result from the following description, are achieved, according to the invention, with a trolley having the characteristics indicated in claim 1.

### BRIEF DESCRIPTION OF THE FIGURES

The constructive and functional characteristics of the trolley according to the present invention can be better understood from the following detailed description, in which reference is made to the attached drawing tables which represent some preferred and non-limiting embodiments, in which:
Figure 1 is an axonometric view of the trolley according to the invention;
figure 2 is a rear view of the trolley of fig. 1;
figure 3 is a rear detail of the trolley of fig. 1;
figure 4 is a front view of the motorized pulley of the trolley according to the invention;
figure 5 is a side view of the motorized pulley of fig. 4;
figure 6 is the section AA of the motorized pulley of fig. 5 in a condition of free movement of the trolley;
figure 7 is a side view of the position of the trigger handle of the trolley according to the invention in a condition of free movement/advancement of the trolley;
figure 8 is the section AA of the motorized pulley of fig. 5 in braking condition of the stair-climbing trolley;
figure 9 is a side view of the position of the trigger handle of the trolley according to the invention in the braking condition of the trolley;
figure 10A illustrates the trolley according to the invention during movement on a horizontal plane;
figure 10B illustrates the trolley according to the invention during movement on a horizontal plane through the tracks and in the intermediate phase between movement on a horizontal plane and an inclined plane;
figure 10C illustrates the trolley according to the invention stationary on an inclined plane and on stairs using the tracks;
figure 10D illustrates the trolley according to the invention during movement on an inclined plane and on stairs using the tracks,

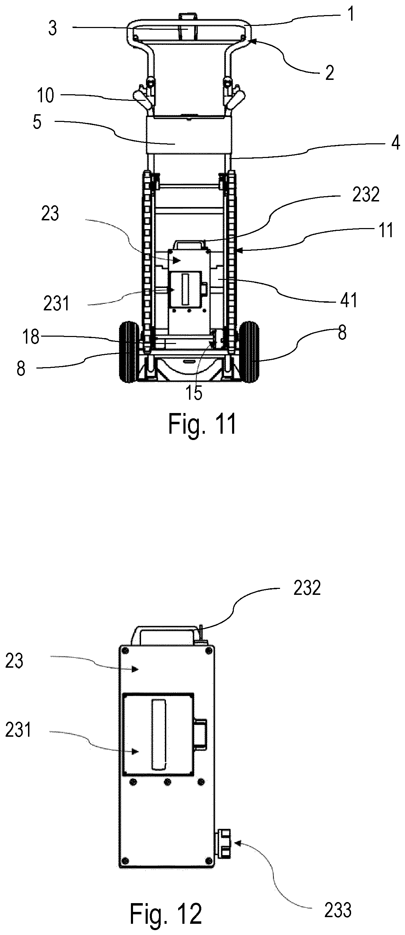

figure 11 is a rear view of the trolley according to the invention with the motorization kit installed,
figure 12 is a front view of the power unit of the trolley motorization kit,

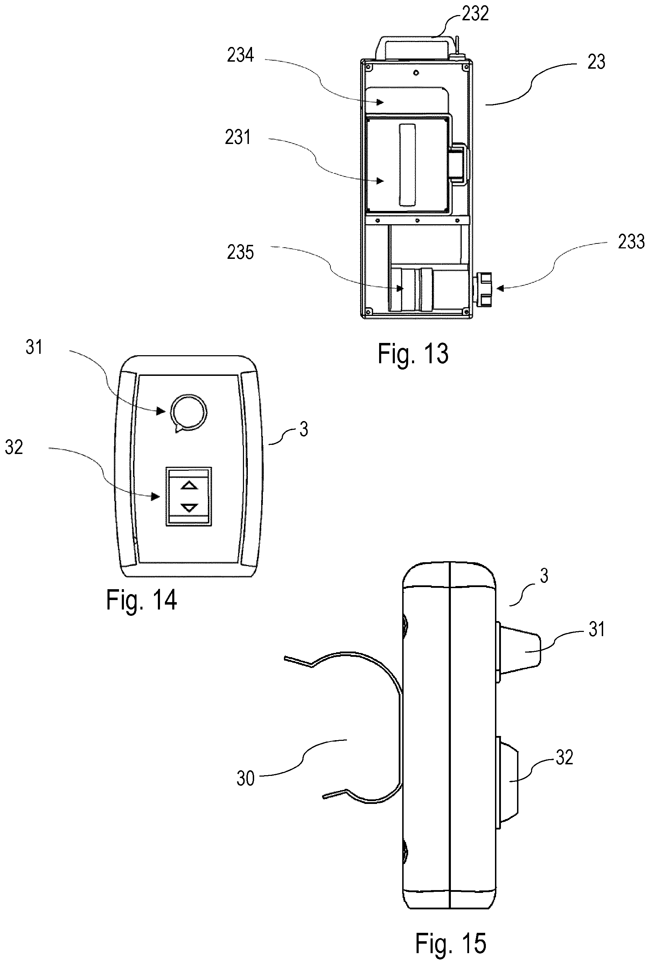

figure 13 is a section of the power unit of fig. 12,
figure 14 is a front view of the control unit of the trolley motorization kit,
figure 15 is a side view of the control unit of fig. 14.

### DETAILED DESCRIPTION OF THE INVENTION

With reference to the figures, a preferred embodiment is shown with some variant details of a trolley 100, in accordance with the present invention.

Hereinafter "load", indicated as a whole with the reference number "50", means any object or goods, or set of several objects/goods, whether packed or unpacked, particularly heavy. Conveniently, the trolley 100 according to the invention is particularly suitable for transporting a load 50 in which one of the dimensions - i.e. the height - is greater than the other two.

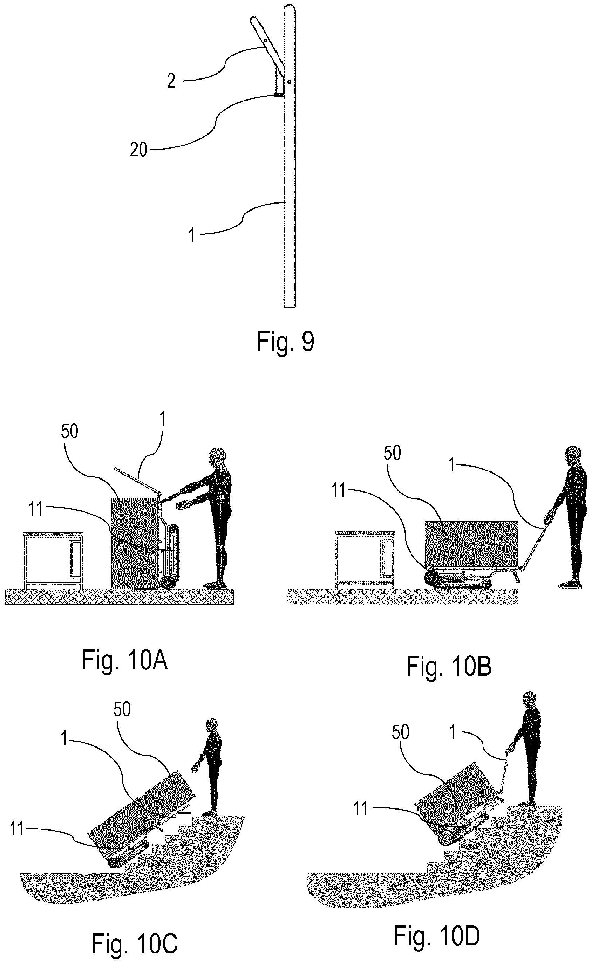

As is clear from the figures, the invention relates to a trolley 100 which is suitable for transporting a load 50 over a difference in height, in particular on a ladder, both up and down (see fig. 10c and 10d). Conveniently, the trolley 100 is also suitable for transporting a load 50 in a substantially flat and horizontal path (see Fig. 10b). Preferably, the trolley 100 is a self-propelled stair-climbing trolley.

The trolley 100 comprises a supporting frame 4 with two track structures 11 which are laterally mounted on said frame 4 so as to protrude below from the frame itself, for the support and/or sliding of said trolley 100.

Conveniently, the pair of track structures 11 are configured to be used (mainly but not exclusively) for moving the trolley up or down a flight of stairs or an inclined plane when in use.

Conveniently, the supporting frame 4 substantially acts as a supporting frame for two lateral track structures 11. In particular, the trolley 100 comprises two track structures 11 which are mounted movable or rotatable to the opposite sides of the supporting frame 4. In particular, the two track structures 11 are substantially parallel and spaced apart from each other.

Conveniently, the tracked structures 11 extend longitudinally, preferably parallel along the length of the sides of the trolley 100 and in particular of the supporting frame 4.

Conveniently, each tracked structure 11 comprises tracks (or belt) 110 which is wound driven around two rotatable elements 6 and 154 (for example toothed wheels and/or pulleys), which rotate around respective axes of rotation, so that each tracks has a first, in use, upper, preferably substantially flat section, a second lower section in use, preferably substantially flat, and intended to come into contact with the support surface (ground and/or stairs).

The trolley 100 also comprises means for supporting and sliding or rolling on a surface, in particular two wheels 8 positioned on opposite sides of the frame 4 and/or of a load structure 9, for supporting and/or sliding the trolley. Preferably, at least two identical and coaxial wheels 8 are provided. Preferably, the pair of wheels 8 is configured for moving the stair-climbing trolley on a horizontal plane.

Conveniently, the wheels 8 are mounted on the frame 4 and are located in correspondence with/proximity to the second load base 52. Preferably, the wheels 8 are rotatable around a substantially horizontal and parallel axis, and arranged substantially transversely between the track structures 11. Appropriately, the two wheels 8 are idle.

The trolley 100 also comprises motor means or means for driving the track structures 11, such as an electric motor or the like, designed to control the rotation of the trackss 110 and, if the trolley rests on a surface (ground or stairs) in correspondence with the tracks , the advancement of the trolley 100 on the surface. Conveniently, the motor means cause the rotation of at least one transmission member 15 keyed on the same shaft 155 on which the rotatable element 154 of a tracked structure is keyed, preferably the rotatable element 154 provided at the wheels 8. Preferably, therefore, the rotatable elements 154 are motorized. Conveniently, while the transmission member 15 is positioned internally with respect to the side of the frame 4, the rotatable element 154 is positioned on the external side of the frame 4.

Preferably, the trolley 100 comprises two motors, one for each track structure 11. Advantageously, each tracked structure 11 can be operated by a respective motor means independently of the other tracked structure.

Advantageously, each tracked structure 11 can then comprise further deflection and/or tensioning rollers, not shown, of the corresponding tracks 110.

Advantageously, the tracked structures 11 can be covered laterally and/or above, at least in part, by a casing.

The trolley 100 comprises a load structure 9 on which the load 50 to be transported is intended to be positioned/placed. The load structure 9 comprises two load bases, 51 and 52 respectively, which are angled to each other, preferably arranged so as to define an angle of about 90°. In particular, the first load base 51 is arranged substantially parallel to the track structures 11, while the second load base 52 is arranged substantially perpendicular to said track structures 11.

In particular, advantageously, the load structure 9 can be of variable dimensions, in order to adapt to loads of different sizes. Conveniently, for this purpose, the second load base 52 can be moved with respect to the first load base 51. Advantageously, in a possible embodiment not shown here, an actuator can be provided to automate the movement of the second load base 52 with respect to the first load base 51.

Conveniently, the two load bases 51 and 52 define respective supports for the load 50 to be transported. Conveniently, the two load bases 51, 52 can comprise a frame formed by longitudinal members spaced and connected to each other by crosspieces and/or a plate, possibly perforated, to thus define a continuous and full support base for the load to be transported.

Conveniently, the first load base 51 comprises a load frame with two lateral longitudinal members connected to each other by crosspieces, while the second load base 52 is defined by a plate with lateral extensions for attachment to the load frame.

Conveniently, the first load base 51 is mounted on a secondary frame 40 which, in turn, is mounted on the load-bearing frame 4. Preferably, the load base 51 is also fixed directly to the load-bearing frame 4. Preferably, the second base of load 52 is mounted on the first load base 51 and/or on the secondary frame 40.

Advantageously, the trolley 100 according to the present invention is configured so that the axis of rotation of the two wheels 8 and the axis of rotation of the rotating elements 6 and 154 provided at the ends of the track structures 11 are substantially always parallel to each other, but never coaxial. Conveniently, the trolley 100 is equipped with handle means. Preferably, said grip means comprise a handle 1 mounted in correspondence with the upper end part of the loading structure 9, i.e. in correspondence with the opposite end part with respect to the lower one which is in proximity to the wheels 8. Preferably, the handle 1 is mounted, preferably in a telescopic way, on the frame of the first load base 51.

Conveniently, the handle means also comprise a trigger handle 2 which is hinged to the handle 1.

Advantageously, a control user interface can be mounted on the handle means and/or trolley control, such as a push button panel, with buttons and/or levers, and/or a touch-screen. Alternatively, the command and/or control user interface of the trolley 1 can be positioned on a suitable remote control, or other remote control system, which thus allows its use by an operator even if it is not in contact with/near the trolley itself.

Preferably, said grip means also comprise handles 10 to facilitate the movement of the trolley, useful in particular for tilting the trolley slightly by moving it from the vertical position to move it on a horizontal plane (see passage from Fig. 10A to Fig. 10B). Preferably, said handles 10 are mounted on a secondary frame 40 which in turn is mounted on the supporting frame 4.

Advantageously, in a possible embodiment not shown, the trolley 100 can also comprise means for causing the inclination/angular displacement of the load structure 9 with respect to the supporting frame 4, as well as with respect to track structures 11. Conveniently, the means for angular inclination/displacement of the load structure 9 can for example comprise one or more actuators or jacks, for example electric, hydraulic or pneumatic. Advantageously, an actuator is provided which is pivoted on one side, for example at one end of its own cylinder, to the bearing frame 4, while on the other side, for example at one end of the rod, is pivoted to the load structure 9. Conveniently, said means 9 can be electronically connected to an electronic control unit, from which they thus receive corresponding actuation commands.

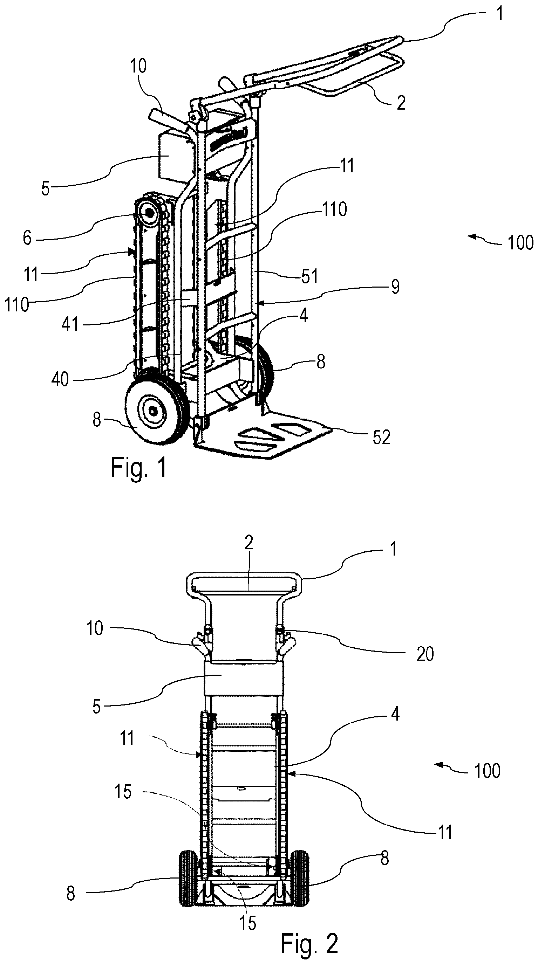

Figure 1 illustrates the trolley 100 with track structures 11 in the braking condition which will be illustrated in detail below.

As already mentioned, the trolley 100 provides a bearing frame 4 to which a loading structure 9 is frontally associated for loading objects to be transported with said trolley, as well as a pair of wheels 8 for moving the trolley 100 on a horizontal plane (see fig.10A). Conveniently, said wheels 8 are arranged on opposite sides of the loading structure 9.

Further, the trolley 100 provides a pair of track structures 11 which are arranged behind the frame 4, i.e. arranged on the opposite side with respect to the loading structure 9.

Conveniently , each of the two track structures 11 comprises tracks or a track 110 which, at its ends, is wound/returned around at least two respective rotatable elements 6 and 154.

The two track structures 11 are mounted on the frame 4 and arranged at the its two opposite sides. In particular, said track structures 11 have a longitudinal direction of development parallel to the frame structure 4.

Conveniently, the track structures 11 are used when moving the trolley up or down a flight of stairs or on an inclined plane in (fig.10C and 10D) or, if desired, also on a horizontal plane (fig.10B), as the rubber-coated tracks 110 grip the edges of the steps of a staircase or in any case on an inclined plane and the stair-climbing trolley is therefore able to translate inclined along the directrix of the staircase itself or of the inclined plane in general, with and without load to be transported, and easily moved by the operator through grip means, in particular to facilitate the handling of the trolley, such as for example, the handle 1.

Conveniently, as said, each track structure 11 comprises at least two revolving elements and, in particular, a first revolving element which is idle 6 (plus n detail is an idle pulley) and a second rotating element 154 which is integral in rotation (being keyed on the same axis/shaft 155) with a motion transmission member 15 actuated in rotation by suitable motorization means. Conveniently, said second rotatable element 154 thus defines a motorized pulley.

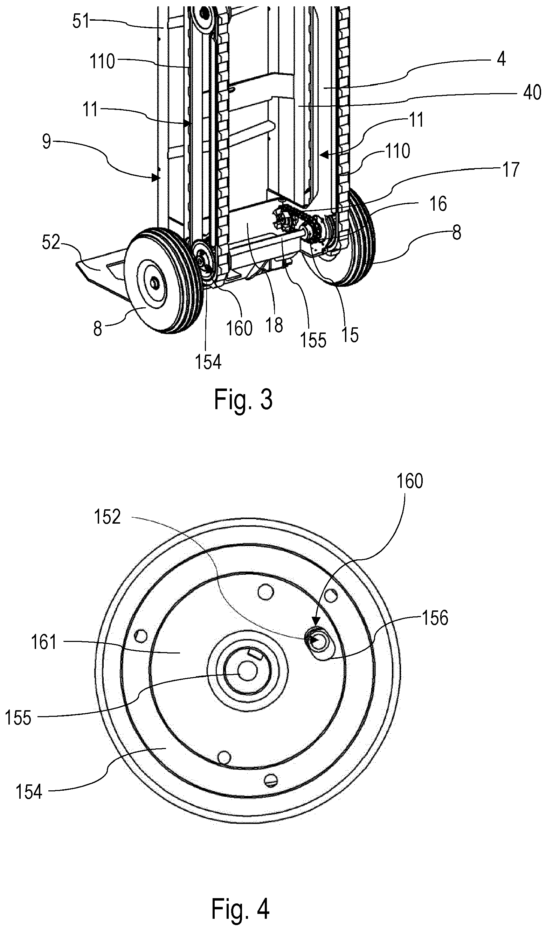

Conveniently, at least one of the rotating elements 6 and 154 of each track structure 11 is idle while the other rotating element can be motorized; preferably, the motorized rotating element is keyed on the same shaft 155 on which a transmission member 15 is also keyed which is connected by means of a transmission tracks 16 to motorized or motorized means of the trolley 100, and in particular the tracks 16 is connected to a rotational transmission joint 17 for drive means (not shown in Fig. 3).

Preferably, in the embodiment of the trolley 100 shown in Figures 1-3, the motion transmission members 15 are placed in proximity to the wheels 8, however an alternative embodiment provides that the motion transmission members are positioned at the idle pulleys 6 of fig. 1, however reaching an equivalent technical solution.

The trolley comprises a braking group 160, which can be controlled by the user, and acting in correspondence with at least one rotatable element 6 or 154 of at least one of said track structures 11. The braking group 160 is configured to assume:
- an activated condition in which a spring 153 pushes a brake 151 into contact with said revolving element 154, thus braking/blocking the rotation of said revolving element 154 and therefore braking/blocking the movement of the tracks 110 of said track structure 11, and
- a deactivated condition in which said spring 153 is compressed, due to the effect of a force applied from the outside by the user, so as to distance the brake from said rotatable element 154, thus allowing the rotation of said rotatable element 154 and therefore allowing movement of the tracks 110 of said track structure 11.

Conveniently, the braking group 160 can act in correspondence with the motorized rotating element 154 and/or in correspondence with the idle rotating element 6.

As said, the frame 4, and in particular the loading structure 9 mounted on frame 4, a handle 1 is associated for moving the stair-climbing trolley along the inclined plane of the flight of stairs, during the ascent or descent thereof, and a trigger handle 2 hinged to the handle 1.

Advantageously, the handle 1 can be extendable and inclinable with respect to the loading structure 9 of the trolley 100.

Conveniently, the trigger handle 2 is connected to braking group 160 and is configured to switch between:
- a first rest position of the trigger handle 2 in which the braking group 160 is in an activated condition, and
- a second working position of the trigger handle 2 in which the braking group 160 is in the deactivated condition.

Conveniently, the trigger handle 2 is articulated to the handle 1 so as to be able to assume two positions and, in particular:
- said first rest position in which the trigger handle 2, in the absence of external stresses, is further away from the handle 1 and is kept stationary in a predefined position, preferably by means of a limit switch element or plate 20 which prevents its rotation, and
- said second working position in which the trigger handle 2 is closest to the handle 1 by means of a rotation imposed by the user towards the handle 1.

Conveniently, in the absence of external stresses/actions by the user, the handle trigger 2 returns and/or remains in the first rest position.

Conveniently, the trigger handle 2 is connected - for example by means of a cable or other conventional equivalent means - to a braking group (mechanism), indicated as a whole with the reference 160, acting on the rotating element 154 to brake and/or thus lock the movement of the tracks 110 of the structures 11.

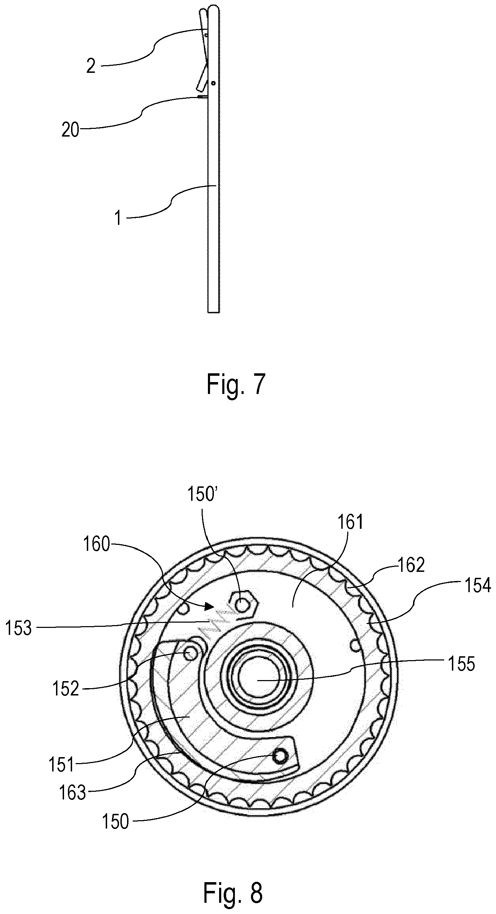

In particular, when and as long as the trigger handle 2 is in the second working position (see fig. 7), and therefore as long as the user keeps said handle 2 in this position , the braking group 160 is in the deactivated condition, thus allowing the free rotation of the rotating element 154 and therefore the movement of the tracks 110 of the structures 11, while when the trigger handle 2 is no longer in the second working position and, in in particular when it is in the first rest position (see fig. 9), the braking group 160 is in an activated condition, braking and/or thus blocking the rotation of the element already revole 154 and therefore the movement of the tracks 110 of the structures 11. Basically, in this second working position (cf. fig. 7), the trigger handle 2 carries out a safety action, allowing the tracks 110 of the structures 11 to rotate freely only and/or as long as the user continues to actively keep the trigger handle 2 in this second working position, i.e. near the handle 1; on the other hand, when the user releases the trigger handle 2, it returns to its rest position (see fig. 9), braking and blocking the rotation of the rotating element 154, and therefore the rotation of the tracks 110. Advantageously, in this way it is therefore also possible to keep the trolley 100 stationary along the ladder or inclined plane even with the load transported without the aid of the operator who keeps it in position (see Fig. 10C).

Advantageously, as said, the trolley 100 also provides further means for facilitating the movement of the trolley, such as for example the handles 10, useful for slightly inclining the stair-climbing trolley moving it from the vertical condition for moving it on a horizontal plane.

Advantageously, the trolley 100 can also provide a storage box 5 fixed to the loading structure 9.

As anticipated and visible in fig. 3, each track structure 11 of the trolley 100 comprises a rotatable element 154 integral in rotation with a motion transmission member 15 which is connected directly or, by means of further transmission means, to motorization means of the trolley 100. Preferably, the motion transmission member 15 can be connected to a transmission tracks 16 in turn rotationally connected to a rotational transmission joint 17 for further connections with motorization means, such as for example those described below. Moreover, between the sides of the frame 4, a housing seat 18 for motorization means, preferably removable, can be defined.

Preferably, the rotatable element 154 comprises an element having - at least in part - an annular conformation, preferably with an external toothed profile 162, around which the tracks 110 of the track structure 11 is wound, and an internal profile 163 on which it is intended to act the brake 151. Conveniently, the rotating element 154 is keyed onto a shaft 155 and rotates with respect to the braking group 160 which is instead fixed and which is conveniently mounted and/or integral with the bearing frame 4. Conveniently, the rotatable element 154 comprises a toothed wheel.

In particular, the braking group 160 comprises at least one support body 161 which is fixed/mounted to and/or supported by the supporting frame 4.

Preferably, the braking group 160 can be partially inserted/housed within the overall dimensions width of the rotating element 154.

The braking group 160 comprises a brake 151 configured and arranged to act on the internal profile 163 of the rotating element 154.

Advantageously, the brake 151 comprises, at least in part, a curved profile which, preferably, resumes the curvature of the internal profile 163 of the rotating element 154, in order to be able to exert an effective braking action.

The braking group 160 also comprises a movable engagement member 152, preferably pin-shaped, which is connected - for example by means of a cable (not visible) - with the trigger handle 2 so that the rotation of said handle causes movement preferably sliding, of said movable engagement member.

The movable engagement member 152 is mounted/supported on the support body 161 of the braking group 160.

The braking group 160 comprises an opening 156, preferably shaped like a slot, which is formed on the support body 161 and inside of which the movable engagement member 152 is mounted and moves (preferably slides) so as to assume two mutually opposite positions.

Conveniently, the brake 151 is articulated at one end 150 on the support body 161, while the opposite end is constrained to the mobile engagement member 152.

Conveniently, the braking group 160 also comprises a spring 153 which has one end connected to the mobile engagement member 152, while the opposite end 150' is constrained to the support body 161. In particular, the spring 153 is associated to the mobile engagement member 152, and therefore to the brake 151, so that the elastic reaction 153 of said spring pushes the brake in contact with the internal profile 163 of the rotating element 154, thus braking/blocking the rotation of the latter, and therefore also of the movement of the trackss 110 of the track structures 11. On the contrary, when the brake 151 is spaced (at least partially) and/or does not act on the internal profile 163 of the rotating element 154, thus allowing the rotation of the latter, and therefore the free movement of the trackss 110 of the tracks 11, the spring 153 is loaded/compressed by the movement (therefore in contrast to the elastic reaction of said spring) of the movable engagement member 152 inside the opening 156, movement which is caused by the action that the user performs on the trigger handle 2 to carry it and then keep it in the second working position.

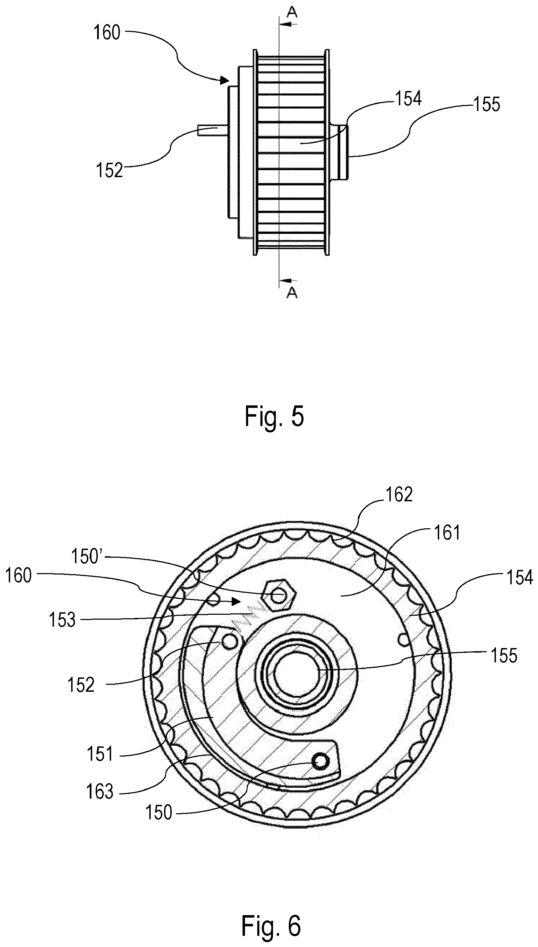

Therefore, conveniently, when the trigger handle 2 is brought and kept in the second working position (see fig. 7), the braking group 160 is in the deactivated condition (see fig. 6), that is the engagement member mobile 152 (which is connected to the trigger handle 2 for example by means of a cable or similar means) is made to slide inside the opening 156, in contrast to the elastic reaction of the spring 153, and brought to an extreme position in which the brake 151 (associated with said member 152) is spaced apart from/removed from the internal profile 163 of the rotating element 154, thus allowing the free rotation of the latter and therefore the free movement of the tracks 110 wound around said rotating element 154. On the contrary , when the trigger handle 2 returns or is in the first rest condition (see fig. 9), the braking group 160 is in an activated condition (see fig. 8), that is, the mobile engagement member 152 (which is attached to the handle 2 for example by means of a cable or similar means) slides inside the opening 156, due to the elastic reaction of the spring 153, to be returned to an opposite extremal position in which the brake 151 (associated with said member 152) comes into contact with the internal profile 163 of the rotating element 154, thus braking/blocking the rotation of the latter and therefore the movement of the tracks 110 wound around said rotating element 154.

Conveniently, as visible in fig. 4, the support body 161 of the braking group 160 comprises a slot 156 inside which the pin 152 can slide to assume two opposite positions, said pin 152 being mounted and slidably supported within said slot 156.

In the section in the figure 6 illustrates the deactivated operating condition of the braking group 160, when it is in a condition which allows the free rotation of the rotatable element 154 (which is free to rotate due to the rotation of the axis 155 caused by the rotation of the transmission member 15 actuated by the motorization means), thus also causing the movement of the tracks 110 adapted to be rotated by the toothed wheel 154. The operating condition of free rotation of the tracks 110 occurs when the user presses the trigger handle 2 against the handle 1 (as visible in fig. 7), thus stretching a cable, not visible in the figures, which moves from the rest position to the working position the pin 152 inside the slot 156, thus compressing the spring 153 and moving the brake 151 away from contact with the internal surface of the rotating element 154 and therefore leaving it free to rotate, and therefore leaving the tracks 110 free to rotate.

the operating condition of the braking tracks 110 instead occurs when the user releases the handle trigger 2 (as seen in fig. 9) or in any case when the trigger handle 2 is in the rest condition. In this way, the cable - not visible in the figures - is released or maintained in rest conditions, which moves the pin 152 inside the slot 156 from the working position to the rest position, thus releasing the compression of the spring 153 (as visible in fig. 6) and allowing the brake 151 to approach towards contact with the internal surface of the rotating element 154, thus braking the rotation of the latter and therefore also braking the movement of the tracks 110.

Advantageously, the trolley 100 can be motorized by means of a motorization kit which, preferably, comprises a power unit 23, a control unit 3, a coupling means 30 for said control unit. Preferably, said kit also comprises a microswitch.

Advantageously, the power unit (PU) 23 comprises a gearmotor 235 preferably equipped with a magnetic brake.

Advantageously, the power unit (PU) 23 comprises a containment case inside which there is a battery box 231 that can be easily removed from the power unit 23, said gearmotor 235 preferably equipped with a magnetic brake, an electronic board 234 equipped with a control unit gearmotor 234, preferably of the type with four-quadrant controller for controlling the gearmotor 235, a transmission joint PU 233 keyed to the output shaft of the gearmotor 235 to transmit the rotation to the motion transmission member 15 of the track structures 11.

Advantageously, the power unit 23 can further provide a handle 232 to facilitate its removal from its housing seat 18 provided on the frame 4 of the trolley, as well as a coupling means 230 that can be easily inserted and disconnected from a suitable PU 41 coupling seat provided on the secondary frame 40 connected to frame 4.

Conveniently, the power unit 23 can be configured in different modes and for different powers, according to requirements.

Conveniently, the power unit 23 is used to motorize the trolley 100 both up and down, so that the travel on the stairs takes place electrically and not manually, an operation that greatly benefits the operator during the lifting phase of the trolley along the flight of stairs or the inclined plane in general.

Advantageously, the control unit 3 defines a man-machine interface so that the user can control the operation of the power unit 23; suitably, the control unit 3 can be connected by means of a cable to the power unit 23 and is equipped with a potentiometer 31 to regulate the speed of the gearmotor 235, preferably capable of implementing a PWM modulation in voltage, and with a control of the direction of travel 32, then forward/backward with balance wheel or proportional suitably sized.

Advantageously, in a possible embodiment, the braking action (or a further action) of the trolley 100, when it is on a slope, can be carried out by the magnetic brakes of the gearmotor 235 of the power unit 23. Conveniently, these magnetic brakes are deactivated only when electrical voltage is supplied to the gearmotor 235 and are restored as soon as it is removed.

Preferably, the revolving elements 154 or 6 of the track structures 11 can be motorized by means of a transmission chain 16 in turn rotationally connected to a rotational transmission coupling 17 which is coupled with the PU 233 transmission coupling of the power unit 23 housed in the housing seat 18.

Advantageously, when it is desired to motorize the trolley 100 with the aforementioned kit, the operator to ensure full operation of the trolley 100 controlled by the control unit 3 with the combined action of the magnetic brakes of the gear motor 235 of the power unit 23 causes each rotatable element 154 of the track structures 11 to be placed and maintained in a condition of free rotation of the tracks 110, and this advantageously takes place in an easy way by means of a coupling means of the control unit 30 consisting of a clip or C-shaped element connected to the control unit 3 itself; in particular, said coupling means of the control unit 30 is applied by pressure to the trigger handle 2 and to the handle 1 when they are close to or possibly in contact in the working position of the trigger handle 2, so as to maintain the trolley 100 in a condition of free movement of the tracks 110 with the braking group 160 in the deactivated condition. The coupling means of the control unit 30 is therefore configured in such a way that it is possible to position it correctly on the trolley only when the handle 1 and the trigger handle 2 are close to each other and, in particular, when the handle trigger 2 is pushed towards the handle 1.

Advantageously, for safety reasons and to prevent damage to the trolley 100 in which the power unit 23 is installed, a mechanical microswitch (not visible in the figures) is provided on the frame 4 directly coupled by one part to the cable connected to the trigger handle 2, which cable controls the activation/deactivation condition of the braking group 160, and on the other side it is connected to the common connection of running of the control unit 234 of the power unit 23. By doing this, it is avoided to enable the operation of the gearmotor 235 when the brake 151 of the braking group 160 is actively braking. The microswitch is therefore in a closed condition, and therefore allows the gearmotor 235 to be moved, only when the trigger handle 2 is in the second working position corresponding to the condition of free movement of the tracks 110; in other conditions, the microswitch is normally open, thus not enabling the movement of the gearmotor 235.

Conveniently, the trolley 100 can be used according to the following method of use (further illustrated in figures 10A, 10B, 10C, 10D) for transport/movement from horizontal to inclined plane/stairs:
- the trolley is gripped by means of means 1, 10 for facilitating the movement of the trolley;
- the trolley 100 is tilted by levering the wheels 8 for movement on a horizontal plane;
- the trolley 100 is placed on the tracks 110 of the track structures 11 on the inclined plane/stairs on which the trolley is to be moved with or without a load, keeping the trigger handle 2 in the second working position, to allow the free movement of the tracks 110;
- in case it is intended to stop the trolley 100 on an inclined plane or on stairs, the trigger handle 2 is released which, thus moving to its first rest position, allows the braking of the tracks 110.

From what has been said it is clear that the trolley according to the present invention is particularly advantageous in that it allows a load to be transported safely and nimbly downhill from or uphill on a ladder of any size or shape, both helical and straight, as well as on a substantially horizontal plane.

## Claims

1. Trolley (100) for transporting a load (50), in particular on stairs, preferably of the stair-climbing trolley type, comprising:
- handle means (1, 10) configured to facilitate the handling of the trolley,
- a load-bearing frame (4) with a load structure (9) which is configured to support the load (50) to be transported,
- a pair of track structures (11) mounted on opposite sides of the supporting frame (4) so as to protrude below from said supporting frame (4) for supporting and/or sliding the trolley, each track structure (11) comprising at least two rotatable elements (6, 154) around which tracks (110) is wound,
- a pair of wheels (8) arranged on opposite sides of the load structure (9) for supporting and/or sliding the trolley,
and **characterized in that** it comprises a braking group (160), which can be controlled by the user, and which acts in correspondence with at least one rotatable element (6, 154) of at least one of said track structures (11), said braking group (160) comprising a spring (153) and a brake (151), said braking group (160) being configured to assume:
- an activated condition in which the spring (153) pushes the brake (151) into contact with said rotating element (154), thus braking/blocking the rotation of said rotating element (154) and therefore braking/blocking the movement of the tracks (110) of said track structure (11), and
- a deactivated condition in which said spring (153) is compressed, by effect of a force applied from the outside by the user, so as to distance the brake from said rotating element (154), thus allowing the rotation of said rotating element (154) and therefore allowing the movement of the tracks (110) of said track structure (11).

2. Trolley according to claim 1, **characterized by** the fact that at least one rotating element (6) of said track structure (11) is idle, while the other rotating element (154) is motorized, and by the fact that said rotating element (154) on which said braking group (160) acts is motorized.

3. Trolley according to one or more of the preceding claims, **characterized in that** at least one rotating element (6) of said track structure (11) is idle, while the other rotating element (154) is motorized, and by the fact that said revolving element (154) on which said braking group (160) acts is idle.

4. Trolley according to one or more of the preceding claims, **characterized in that** said rotatable element (154) comprises an external profile (163), preferably toothed, around which said tracks (110) is wound and an internal profile (163) on the which said brake (151) acts when said braking group (160) is in an activated condition.

5. Trolley according to the preceding claim, in which the brake (151) has a curved shape which reproduces the curvature of the internal profile (163) of the rotating element (154) on which the braking group (160) acts.

6. Trolley according to one or more of the preceding claims, **characterized in that** at least one rotating element (154) is motorized and is keyed on the same shaft (155) on which is also keyed a transmission member (15) which is connected and actuated in rotation by means of motorization.

7. Trolley according to one or more of the preceding claims, **characterized in that** said braking group (160) is mounted on and/or is integral with said supporting frame (4).

8. Trolley according to one or more of the preceding claims, **characterized in that** said braking group (160) comprises:
- a movable engagement member (152) which is connected with a trigger handle (2) so that the movement, preferably in rotation, of said trigger handle causes the movement of said movable engagement member (152),
- an opening (156), which is formed on a support body (161) of the braking group (160), and inside which said movable engagement member (152) is moved so as to assume two corresponding positions respectively to the activated and deactivated condition of the braking group (160),
- said brake (151) which is articulated at one end (150) on the support body (161), while the opposite end of said brake (151) is constrained to the movable engagement member (152),
- said spring (153) which has one end connected to the movable engagement member (152), while the opposite end (150') of said spring (153) is constrained to the support body (161).

9. Trolley according to one or more of the preceding claims, **characterized in that**:
- each track structure (11) comprises at least one idle rotating element (6) and a rotating element (154) which is configured both to allow free rotation of the tracks (110) and to allow braking and locking of the free rotation of the tracks (110) when in use,
- said rotatable element (154) comprises a toothed wheel free to rotate with respect to the braking group (160) and keyed on an axis (155), said toothed wheel being adapted to allow rotation when the tracks (110) are in use, said group (160) also comprising said brake (151) configured to be controlled by the user to enter or not into contact with the internal profile (163) of the toothed wheel to respectively actuate or not a braking action on the toothed wheel and therefore on the tracks (110) when in use.
- said braking group (160) comprises a pin (152) configured to be moved inside a slot (156) between a first rest position in which the compression of the spring (153) is released, allowing the brake (151) to come into contact with the internal profile (163) of the toothed wheel therefore braking it and therefore braking the movement of the tracks (110), and a second working position in which it compresses the spring (153) allowing the brake (151) to move away from the internal profile (163) of the toothed wheel, therefore allowing its rotation and therefore the free rotation of the tracks (110) when in use, since the brake (151) is constrained at one end to a constraint (150) integral with the braking group (160) and at the opposite end being associated with the pin (152), and the spring (153) being connected at one end to the pin (152) and at the opposite end being connected to a constraint (150) integral with the braking (160).

10. Trolley according to one or more of the preceding claims, **characterized in that** it comprises a trigger handle (2) which is connected to the braking group (160) and is configured to switch between:
- a first rest position of the trigger handle (2) in which the braking group (160) is in an activated condition, and
- a second working position of the trigger handle (2) in which the braking group (160) is in the deactivated condition.

11. Trolley according to the preceding claim, **characterized in that**, in the absence of external stresses/actions by the user, the trigger handle (2) returns and/or remains in the first rest position.

12. Trolley according to one or more of the claims preceding, **characterized in that**:
- said handle means comprises a handle (1),
- said trigger handle (2) is articulated to said handle (1),
- in said first rest position, the trigger handle (2), in the absence of external stresses, is further away from the handle (1), and
- in said second working position, the trigger handle (2) is closer to the handle (1) by means of a rotation imposed by the user towards the handle (1).

13. Trolley according to the preceding claim, **characterized in that** it comprises a limit switch element (20) which maintains the first rest position of the trigger handle (2) when it is not operated by the user.

14. Trolley according to one of the preceding claims **characterized in that** it comprises a removable kit for motorizing the trolley, said kit comprising a power unit (23), a control unit (3), a coupling means (30) of said control unit.

15. Trolley according to one of the preceding claims **characterized in that** it comprises at least one power unit (23) for the motorization of at least one rotatable element (154) of said at least one tracked structure (11) and **in that** said power unit (23) is equipped with a magnetic brake.
